# EUROPEAN PATENT SPECIFICATION

(11) **EP 3 887 732 B1**
(45) Date of publication and mention of the grant of the patent: **20.07.2022**
(21) Application number: 19831898.2
(22) Date of filing: 29.11.2019
(51) Int. Cl.: F24F 13/28, B01D 46/00, F24F 13/08, F24F 11/39, F24F 1/0073, F24F 5/00, F24F 13/14, F24F 110/10

(54) **FAN COIL**
GEBLÄSEKONVEKTOR
VENTILO-CONVECTEUR

(30) Priority: 29.11.2018 IT 201800010688
(43) Date of publication of application: 06.10.2021
(73) Proprietor: AERMEC S.p.A., 37040 Bevilacqua (VR) (IT)
(72) Inventor: RIELLO, Giordano, 37040 Bevilacqua (VR) (IT); CAVALLO, Pierpaolo, 37040 Bevilacqua (VR) (IT); FACCIO, Franco, 37040 Bevilacqua (VR) (IT); CARPANESE, Filippo, 37040 Bevilacqua (VR) (IT)
(74) Representative: Bellemo, Matteo
(86) International application number: PCT/IB2019/060335
(87) International publication number: WO 2020/110087

(56) References cited:
- JP-U- S4 851 154
- JP-U- S5 878 413
- US-A1- 2015 283 489
- US-B1- 6 284 011

## Description

### CROSS-REFERENCE TO RELATED APPLICATIONS

This application claims priority from Italian Patent Application No. 102018000010688 filed on 29/11/2018.

### TECHNICAL FIELD

The present invention relates to a fan coil unit.

In greater detail, the present invention relates to a wall-mounted fan coil unit.

### BACKGROUND ART

As is known, wall-mounted fan coil units are substantially parallelepiped-shaped devices, which are arranged in a vertical position inside the room to be air-conditioned, usually close to the floor and adjacent to one of the walls of the room, and are adapted to heat or cool the air inside the room.

In greater detail, the fan coil units currently on the market usually comprise: a rigid and substantially parallelepiped-shaped, outer box-like casing which is structured for being firmly fixed to the wall in a vertical position, more or less at about ten centimetres from the floor, and is internally provided with a large through duct, usually having a rectangular section, which extends vertically from one side of the box-like casing to the other, and is closed at the top by a protective grating; an air/liquid heat exchanger which is placed inside the duct so as to be skimmed/crossed by the air that flows through the duct, and is connected to an external hydraulic circuit so as to be also continuously crossed by a flow of hot or cold water; and an electrically-operated fan which is placed inside the through duct, upstream of the heat exchanger, and is adapted to produce an upward airflow that flows through the whole length of the vertical through duct, passing through/skimming the heat exchanger.

Usually the aforementioned fan coil units additionally comprise: an air filter with a plate-like structure, which is arranged to close the lower mouth of the vertical through duct, beneath the fan; and a condensation-collection tray which is placed immediately beneath the heat exchanger, and is adapted to collect the drops of condensed water that, in use, fall from the heat exchanger when the same is crossed by cold water.

Being structured to retain dust and other impurities suspended in the air entering the through duct, the air filter must be periodically extracted and cleaned or replaced so as to maintain healthy the air circulating inside the room.

Unfortunately, the timing for air-filter maintenance is strictly correlated to the quality of the air present in the environment to be air-conditioned, and is often not respected for various reasons.

To overcome this drawback, fan coil units have been recently put on the market wherein the electronic control unit of the fan coil unit takes into account the operating hours of the appliance starting from the last maintenance of the air filter, and is programmed to light a warning LED on the control panel when the operating hours reach a pre-determined limit value at which it is necessary to perform the next maintenance of the air filter.

Unfortunately, very often the lighting of the LED is not immediately noticed by the people in the room, with all problems that this entails.

The clogged air filter, in fact, as well as compromising the quality of the air, additionally reduces the efficiency of the fan coil unit with the resulting increase in operating costs. JPS4851154 U discloses a fan coil unit wherein the air filter is fixed, in a manually removable manner, to the back of a protective grating that closes the inlet mouth of the fan coil unit. The air filter is movable with respect to the protective grating between an operating position in which the air filter is substantially entirely accommodated inside the body of the protective grating so as to be crossed by the air entering into the fan coil unit; and a replacement position in which the air filter partially protrudes outside of the protective grating so as to be easily reachable/graspable by a person for being removed.

### DISCLOSURE OF INVENTION

Aim of the present invention is to overcome the drawbacks described above.

In compliance with these aims, according to the present invention there is provided a fan coil unit as defined in Claim 1 and preferably, though not necessarily, in any one of the claims dependent thereon.

### BRIEF DESCRIPTION OF THE DRAWINGS

The present invention will now be described with reference to the annexed drawings, which illustrate a non-limiting embodiment, wherein:
- Figure 1 is a perspective view of a wall-mounted fan coil unit realized according to the teachings of the present invention;
- Figure 2 is a perspective view of the lower part of the fan coil unit shown in Figure 1, in a second operating configuration;
- Figure 3 is a side view of the fan coil unit shown in Figure 1, sectioned along the midplane and with parts removed for clarity's sake;
- Figure 4 is a partially exploded perspective view of the fan coil unit shown in Figure 1, without the outer casing and with parts removed for clarity's sake;
- Figure 5 is an enlargement of the lower part of the fan coil unit shown in Figure 3, with parts removed for clarity's sake;
- Figure 6 is an enlargement of the lower part of the fan coil unit shown in Figure 3, with parts removed for clarity's sake and in a second operating configuration;
- Figure 7 is a perspective view of a second embodiment of the fan coil unit shown in Figure 1, with parts removed for clarity's sake; whereas
- Figure 8 is a perspective view of the lower part of the fan coil unit shown in Figure 7, in a second operating configuration.

### BEST MODE FOR CARRYING OUT THE INVENTION

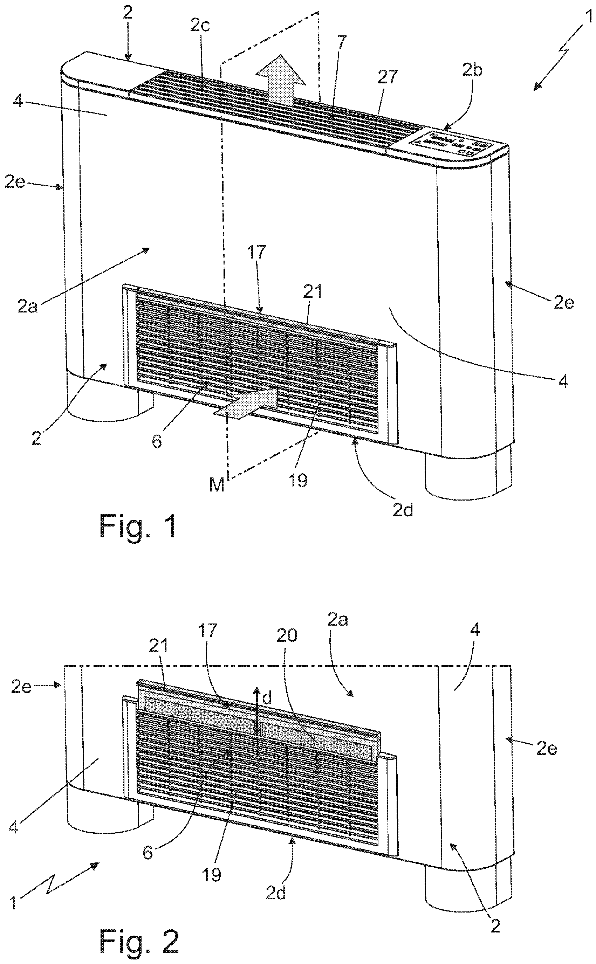

With reference to Figures 1, 2, 3 and 4, number 1 denotes as a whole a wall-mounted fan coil unit, which is adapted to heat or cool the air present inside a generic room to be air-conditioned, and is particularly adapted for being arranged inside the room to be air-conditioned in a substantially vertical position, preferably adjacent to one of the walls of the room and preferably at a short distance from the floor.

In addition, the fan coil unit 1 is also particularly adapted for being firmly anchored to the wall of the room to be air-conditioned.

In greater detail, the fan coil unit 1 is provided with a rigid and substantially parallelepiped-shaped, outer box-like casing 2 which has: a front face 2a and a rear face 2b opposite to one another and substantially perpendicular to the midplane M of the fan coil unit; an upper face 2c and a lower face 2d opposite to one another and substantially perpendicular to the midplane M of the fan coil unit; and finally two side faces 2e that are arranged on opposite sides of the midplane M of the fan coil unit, spaced by the midplane M.

The box-like casing 2, in addition, is adapted to be hung/fixed onto the wall P of the room to be conditioned in a substantially vertical position, so that the front face 2a, the rear face 2b, and the two side faces 2e are substantially vertical, and that the upper face 2c and the lower face 2d are substantially horizontal.

Preferably the box-like casing 2 of fan coil unit 1 is moreover adapted to be fixed on the wall P of the room to be air-conditioned with the rear face 2b resting on/abutting against the wall P, and preferably with the lower face 2d at about 5-15 cm (centimetres) above the floor S.

In greater detail, the fan coil unit 1 preferably comprises: a substantially rigid and self-supporting inner framework 3 which is structured for being firmly fixed to the wall P, at a given distance from the floor S underneath; and a concave and substantially rigid, outer shell or covering 4 which is fixed/ fitted onto the inner framework 3 so as to surround and cover the inner framework 3, forming at least the front face 2a and the two side faces 2e of the outer casing 2, and optionally also the upper face 2c and/or the lower face 2d of outer casing 2.

In addition, the fan coil unit 1 is provided with a large through duct 5 which is adapted to be crossed by the outside air, and which extends through the outer casing 2 preferably while remaining astride the midplane M.

In greater detail, the through duct 5 is preferably substantially L-bent so that the inlet mouth 6 of the duct is located on the front face 2a of outer casing 2, preferably adjacent to the lower face 2d, and that the outlet mouth 7 of the duct is placed on the upper face 2c of outer casing 2.

In other words, the inner framework 3 and the outer shell or covering 4 jointly form/define a large through duct 5, which starts at the front face 2a and ends at the upper face 2c of outer casing 2.

Preferably, in addition the inlet mouth 6 and/or the outlet mouth 7 of through duct 5 is/are substantially rectangular in shape.

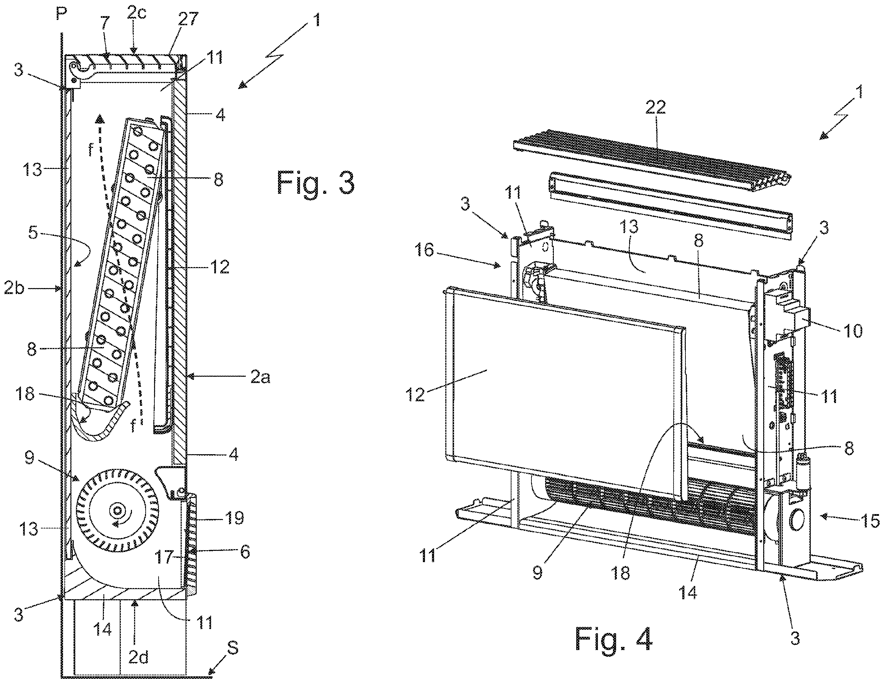

With reference to Figures 3 and 4, the fan coil unit 1 additionally comprises at least one air/liquid heat exchanger 8 preferably having a plate-like structure, and an electrically-operated fan 9.

The heat exchanger 8 is placed inside the through duct 5, preferably immediately upstream of the outlet mouth 7, so as to be crossed or in any case skimmed by the air entering into the through duct 5 through the inlet 6 and flowing along the duct, and is adapted to be connected to an external hydraulic circuit (not shown) so as to be continuously crossed by a flow of water or other heat-transfer liquid at a given temperature. The temperature value of the water or other heat-transfer liquid, in addition, is preferably controlled by an external cooling and/or heating station.

In other words, the heat exchanger 8 is preferably placed along the vertical portion of the through duct 5.

The fan 9, on the other hand, is placed inside the through duct 5, preferably between the heat exchanger 8 and the inlet mouth 6 of through duct 5, so as to generate a rising airflow f that flows along the through duct 5 crossing/skimming the heat exchanger 8.

In greater detail, the fan 9 is preferably placed at the elbow of the through duct 5, and is adapted to generate an airflow f that enters into the through duct 5 through the inlet mouth 6 located on the front face 2a of outer casing 2, diverts upwards at the fan 9, passes through/skims the heat exchanger 8, and then proceeds along the vertical segment of through duct 5 towards the outlet mouth 7 arranged on the upper face 2c of outer casing 2, from where flows out of the fan coil unit 1.

In addition, the fan coil unit 1 is provided with an electronic control unit 10 which is placed inside the box-like casing 2, and is adapted to control the fan 9 based on the signals arriving from one or more temperature sensors (not shown) adapted to detect the temperature of the air around the fan coil unit 1, and/or based on the signals arriving from one or more temperature sensors (not shown) adapted to detect the temperature of the heat exchanger 8.

With reference to Figures 3 and 4, in the example shown, in particular, the inner rigid framework 3 preferably comprises: two rigid and preferably substantially rectangular-shaped, plate-like lateral elements 11 which are preferably made of metal material, are arranged on opposite sides of the midplane M of the fan coil unit, substantially parallel to one another and facing each other and the midplane M, and are structured so as to be fixed by a side to the wall P; and preferably also a plate-like transversal longitudinal member 12 preferably made of metal material, which extends astride the two plate-like lateral elements 11, more or less perpendicularly to the midplane M and to the two plate-like lateral elements 11, so as to rigidly connect the two plate-like lateral elements 11 to one another.

The plate-like transversal longitudinal member 12, in addition, is preferably oriented so as to be also substantially parallel and spaced from the lying plane of the two sides of the plate-like lateral elements 11 adapted to be arranged in abutment on the wall P.

The through duct 5 is laterally delimited by the two plate-like lateral elements 11.

Optionally the inner rigid framework 3 additionally comprises a plate-like rear partition panel 13 preferably made of metal material, which extends astride the two plate-like lateral elements 11, so as to substantially skim the wall P and, thus, be locally substantially parallel and spaced from the plate-like transversal longitudinal member 12.

The partition panel 13, if present, contributes to form the rear face 2b of the outer box-like casing 2.

The plate-like transversal longitudinal member 12 delimits, together with the two plate-like lateral elements 11 and, if present, with the rear partition panel 13, the vertical segment of through duct 5.

Preferably the heat exchanger 8 is thus placed between the two plate-like lateral elements 11 of inner framework 3, beside the plate-like transversal longitudinal member 12.

Preferably the heat exchanger 8 is moreover a substantially rectangular-shape, finned pack heat exchanger, and is preferably oriented and dimensioned so as to substantially take up the whole area/cross-section of through duct 5.

In greater detail, the heat exchanger 8 has a plate-like structure and is preferably tilted by some degrees with respect to the vertical, so as to have a lower lateral edge adjacent to or resting on the partition panel 13 and an upper lateral edge adjacent to or resting on the plate-like transversal longitudinal member 12.

The fan 9, on the other hand, is preferably placed between the two plate-like lateral elements 11 of inner framework 3, spaced beneath the heat exchanger 8.

The inlet mouth 6 of through duct 5, in turn, is preferably realized on the outer shell or covering 4, spaced beneath the transversal longitudinal member 12, so as to be substantially horizontally aligned with fan 9.

In greater detail, the fan 9 is preferably an electrically-operated tangential fan, and extends astride the two plate-like lateral elements 11 of inner framework 3, spaced beneath the heat exchanger 8, preferably so that the volute 14 of the fan 9 contributes to form the lower face 2d of the outer box-like casing 2.

With reference to Figure 4, in addition, the inner rigid framework 3, or rather the two plate-like lateral elements 11 of inner framework 3, and the outer shell or covering 4 are preferably shaped/structured so as to form/delimit two lateral service compartments 15 and 16, which are placed inside the box-like casing 2, on opposite sides of the through duct 5 and of the midplane M of the fan coil unit, so as to both be adjacent/ skim the wall P of the room.

The service compartment 15 preferably accommodates the electronic control unit 10 and optionally also the temperature sensor (s) and/or the electrical connectors (not visible in the Figures) that allow to connect the fan coil unit 1, or rather the fan 9, to the external electrical network (not shown).

The service compartment 16, on the other hand, preferably accommodates the hydraulic fittings, the shut-off valves and the other hydraulic components (not shown in the Figures) that allow to connect the heat exchanger 8 to the external hydraulic circuit (not shown).

With reference to Figures from 1 to 6, in addition, the fan coil unit 1 is provided with an air filter 17 and preferably also with a condensate-collection tray 18.

The air filter 17 is fixed in manually removeable manner to a protective grating 19 which is arranged to close the inlet mouth 6 of through duct 5, and is structured so as to retain the dust suspended in the air entering the through duct 5.

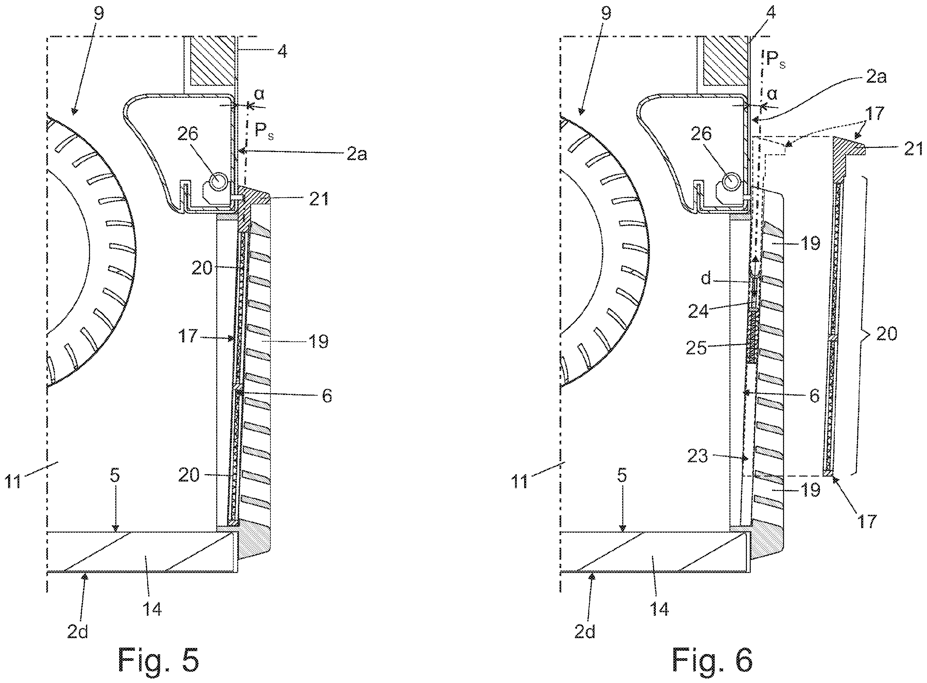

In addition, the air filter 17 is coupled to the protective grating 19 so as to be movable between an operating position (see Figures 1, 3 and 4) in which the air filter 17 is substantially entirely accommodated into the body of protective grating 19 so as to be crossed by substantially the all air entering into through duct 5 through the inlet mouth 6; and a replacement position (see Figures 2 and 6) in which the air filter 17 protrudes partially outside the protective grating 19 so as to be easily reached/grasped by a person for being removed.

In the example shown, in particular, the air filter 17 preferably has a plate-like structure, and is preferably guillotine inserted into the body of protective grating 19 in removable manner .

Preferably the sliding plane Ps of the air filter 17 is moreover tilted by a given angle α, preferably lower than 5°, with respect to the lying plane of the protective grating 19 and/or to the surface of the front face 2a of outer casing 2.

Preferably, when in the operating position, the air filter 17 is furthermore substantially entirely accommodated inside the protective grating 19. When in the replacement position, in turn, the air filter 17 protrudes partially from a lateral side of protective grating 19, so as to be easily reachable and graspable by a person.

In greater detail, with particular reference to Figures 2, 3, 5 and 6, the air filter 17 is preferably provided with a plate-like filtering section 20, which is structured to retain the dust suspended in the air, is guillotine inserted into the body of protective grating 19, and preferably has a shape substantially complementary to that of the inlet mouth 6 of through duct 5; and a handle 21 preferably oblong in shape, which is placed along a lateral side of the plate-like filtering section 20.

In the example shown, in particular, the plate-like filtering section 20 of air filter 17 is substantially rectangular in shape, and the handle 21 extends along one of the longer sides of the plate-like filtering section 20, preferably substantially for the whole length of the same longer side.

In the operating position, the filtering section 20 of air filter 17 is arranged inside the protective grating 19, in front of the inlet mouth 6 of through duct 5, so as to substantially completely close/obstruct the inlet mouth 6 of through duct 5 and being consequently crossed by substantially all the air entering the through duct 5 through inlet mouth 6. The handle 21 of air filter 17, in turn, is preferably placed at a lateral side of protective grating 19, so as to form at least a segment of the lateral side of protective grating 19.

In the replacement position, instead, the filtering section 20 of air filter 17 is offset/misaligned with respect to the inlet mouth 6 of through duct 5, so as to only partially close/obstruct the inlet mouth 6 of through duct 5, and moreover juts out cantilevered from the lateral side of protective grating 19 thus moving the handle 21 apart from the lateral side of protective grating 19, so as to make the handle 21 more easily reachable and graspable by a person.

With reference to Figures 5 and 6, the fan coil unit 1 additionally comprises a power-assisted ejection device 22 which is placed inside the box-shaped casing 2, and is adapted to move, on command, the air filter 17 from the operating position to the replacement position.

Preferably, though not necessarily, the power-assisted ejection device 22 can be additionally structured so as to return, on command, the air filter 17 into the operating position.

The electronic control unit 10, in turn, is adapted to command the power-assisted ejection device 22, so as to arrange/bring the air filter 17 into the replacement position when given operating conditions occur.

In greater detail, in the example shown, the protective grating 19 is preferably provided with a large central compartment 23 which is located at the inlet mouth 6 of through duct 5, and has a shape roughly complementary to that of the air filter 17, or rather to that of the plate-like filtering section 20 of air filter 17, so as to accommodate the air filter 17, or rather the plate-like filtering section 20 of air filter 17.

The air filter 17 is in the operating position when the filtering section 20 of air filter 17 takes up the whole central compartment 23 of protective grating 19.

Preferably, the central compartment 23 moreover communicates with the outside through a rectilinear slot formed on the upper side of protective grating 19.

The power-assisted ejection device 22, on the other hand, preferably comprises: an elastic member that opposes in elastic manner to the penetration/advancement of the air filter 17, or rather of the plate-like filtering section 20 of air filter 17, inside the central compartment 23 of protective grating 19, beyond a pre-determined limit position; and a locking mechanism which is adapted to firmly retain the air filter 17 inside the central compartment 23, in the operating position, and to release, on command, the air filter 17 so as to allow the elastic member to quickly return the air filter 17 to the limit position mentioned above.

In greater detail, the power-assisted ejection device 22 preferably comprises: two retractable rectilinear rods 24 which are placed on the two substantially vertical sides of the central compartment 23 of protective grating 19, parallel to the insertion direction of the air filter 17 in the compartment, and are structured so as to arrange their distal ends in abutment against the shorter lateral sides of the filtering section 20 of air filter 17, so as to retract during insertion of the air filter 17 inside the central compartment 23; two thrust coil springs 25 that are fitted onto the retractable rods 24 so as to keep the retractable rods 24 in elastic manner into the completely extracted configuration; and an electromechanical actuator 26 which is selectively adapted to hook and lock the air filter 17 to the body of protective grating 19, when the plate-like filtering section 20 of the air filter 17 takes up/ engages the whole central compartment 23 of protective grating 19.

In the example shown, in particular, the electromechanical actuator 26 is preferably located at the upper side of protective grating 19, and is adapted to latch-like insert into the body of the air filter 17 when the plate-like filtering section 20 of air filter 17 takes up/engages the whole central compartment 23 of protective grating 19.

The electronic control unit 10, on the other hand, is preferably programmed/configured so as to activate the power-assisted ejection device 22, or rather the electromechanical actuator 26, when the operating hours of the fan coil unit 1 reach a pre-determined limit value.

In other words, the electronic control unit 10 is preferably programmed/configured so as to count the operating hours of the fan coil unit 1 from the last maintenance of the air filter 17, and to activate the power-assisted ejection device 22, or rather the electromechanical actuator 26, to bring the air filter 17 in the replacement position, when the operating hours of the fan coil unit 1 reach a pre-determined limit value. Limit value at which it is recommended to perform a new maintenance of the air filter 17.

In the example shown, in particular, the electronic control unit 10 is preferably programmed/configured so as to activate the power-assisted ejection device 22, or rather the electromechanical actuator 26, when the fan coil unit 1 exceeds, for example, 200 operating hours without maintenance of the air filter 17.

Optionally the electronic control unit 10 is additionally programmed/configured so as to activate the power-assisted ejection device 22, or rather the electromechanical actuator 26, when a clogging of the air filter 17 is detected.

Preferably, the electronic control unit 10 is moreover programmed/configured so as to interrupt/prevent the operation of the fan 9 when the fan coil unit 1 exceeds the pre-determined limit value of the operating hours without maintenance and/or when a clogging of the air filter 17 is detected.

In this case, the fan coil unit 1 is preferably additionally provided with at least one filter-cleaning sensor (not shown), preferably of optoelectronic or capacitive type, which is adapted to determine, in real time or cyclically, the degree of clogging of the air filter 17 and then communicate the same to electronic control unit 10.

With reference to Figure 3, on the other hand, the condensate-collection tray 18 is preferably placed immediately beneath the heat exchanger 8, and is adapted to collect the drops of condensed water that, in use, are formed and fall by gravity from the heat exchanger 8 when the heat exchanger cools the airflow flowing through the through duct 5.

In greater detail, in the example shown the condensate-collection tray 18 preferably extends astride the two plate-like lateral elements 11 of inner framework 3, substantially alongside the lower edge of plate-like transversal longitudinal member 12.

Preferably, a small drainage tube (not shown) moreover branches off from the bottom of condensate-collection tray 18 and connects the condensate-collection tray 18 to an external water discharge duct (not shown) so as to drain by gravity the condensed water into the duct.

With reference to Figures 1, 3 and 4, finally the fan coil unit 1 is preferably also provided with an upper protective grating 27 which is fixed, preferably in manually removable manner, to the upper face 2c of outer casing 2, at closure of the outlet mouth 7 of through duct 5.

Operation of fan coil unit 1 is easily inferable from what written above.

The person who physically performs maintenance on the air filter 17 must push the air filter 17 into the protective grating 19 compressing the thrust coil springs 25 until the electromechanical actuator 26 is able to firmly hook and lock the air filter 17 in the operating position.

When the power-assisted ejection device 22 moves the air filter 17 into the replacement position, the air filter 17 becomes easily accessible from the outside and can be easily removed from the protective grating 19 for scheduled maintenance.

The advantages associated with the automatic movement of the air filter 17 into the replacement position are remarkable.

Experimental tests have shown that people in the room where the fan coil unit 1 is located, are more prompt and diligent in requesting or performing maintenance on the air filter 17, when the air filter 17 automatically protrudes from the protective grating 19, and this it allows a correct periodic maintenance (cleaning or replacement) of the air filter 17.

It is finally clear that modifications and variants may be made to the fan coil unit 1 described above without however departing from the scope of the present invention.

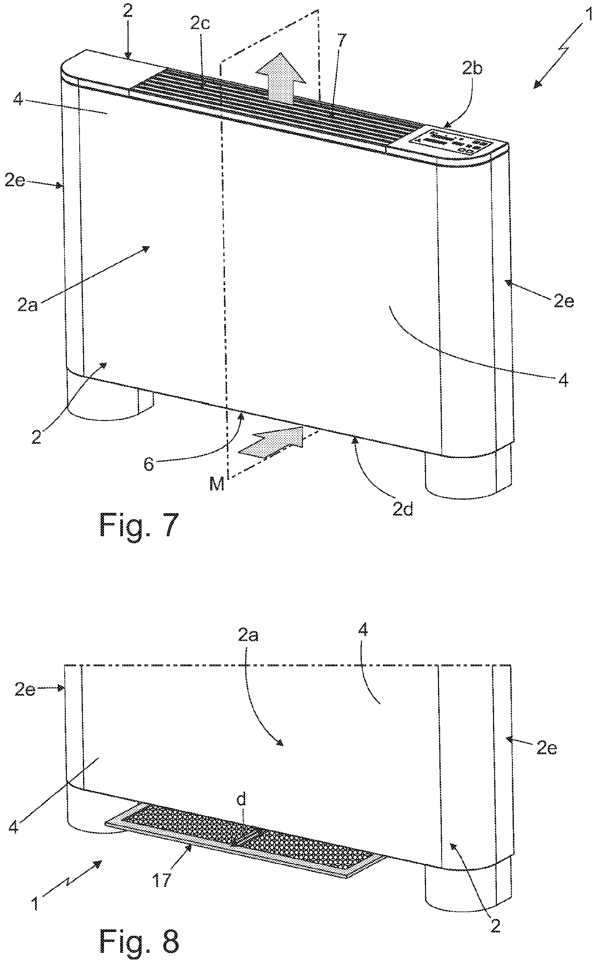

For example, with reference to Figures 7 and 8, in a different embodiment of the fan coil unit 1, the through duct 5 is substantially rectilinear and starts at the lower face 2d of outer casing 2.

In other words, in this embodiment, the inlet mouth 6 of through duct 5 is located on the lower face 2d of outer casing 2, while the outlet mouth 7 of through duct 5 continues to be located on the upper face 2c of outer casing 2.

The movable protective grating 19 is then placed at the lower face 2d of outer casing 2, and the air filter 17 is coupled to the protective grating 19 so as to be movable horizontally between an operating position (see Figure 7) in which the air filter 17 is substantially entirely accommodated into the body of the protective grating 19 located on the lower face 2d of outer casing 2; and a replacement position (see Figure 8) in which the air filter 17 protrudes partially outside of the protective grating 19 and in cantilevered manner beyond the front face 2a of outer casing 2, so as to be easily reachable/ graspable by a person for being removed.

Also in this embodiment, the power-assisted ejection device 22 is adapted to move, on command, the air filter 17 from the operating position to the replacement position.

Finally, in an alternative not-shown embodiment the power-assisted ejection device 22 can comprise a motor-driven linear actuator which is able to slowly move the air filter 17 from the operating position to the replacement position and vice versa.

## Claims

1. A fan coil unit (1) comprising: a substantially parallelepiped-shaped and rigid outer casing (2) which is structured for being firmly fixed to a wall (P) in a substantially vertical position, and is provided with a large through duct (5) adapted to be crossed by the outside air; an air/liquid heat exchanger (8), which is located inside the through duct (5) so as to be skimmed/crossed by the air that flows along the through duct (5), and is connected to an external hydraulic circuit so as to be also crossed by a hot or cold heat-transfer liquid; a fan (9) adapted to circulate the outside air into the through duct (5); a protective grating (19) that is arranged on a face (2a, 2d) of the outer casing (2) so as to close an inlet mouth (6) of the through duct (5); and an air filter (17) which is fixed, in a manually removable manner, to said protective grating (19);
the air filter (17) being coupled to the protective grating (19) so as to be movable between an operating position in which the air filter (17) is substantially entirely accommodated inside the body of the protective grating (19) so as to be crossed by substantially the whole air that enters the through duct (5) via the inlet mouth (6); and a replacement position in which the air filter (17) partially protrudes outside of the protective grating (19) so as to be easily reachable/graspable by a person for being removed;
the fan coil unit (1) being **characterized in that** it additionally comprises: a power-assisted ejection device (22) which is adapted to move, on command, the air filter (17) from the operating position to the replacement position; and an electronic control unit (10) which is adapted to control said power-assisted ejection device (22) so as to arrange the air filter (17) in the replacement position when given operating conditions occur.

2. Fan coil unit according to Claim 1, wherein the electronic control unit (10) is adapted to also control the fan (9) based on the signals arriving from one or more temperature sensors adapted to detect the temperature of the air surrounding the fan coil unit (1), and/or based on the signals arriving from one or more temperature sensors adapted to detect the temperature of the heat exchanger (8).

3. Fan coil unit according to Claim 1 or 2, wherein the electronic control unit (10) is programmed/configured so as to activate said power-assisted ejection device (22) when the operating hours of the fan coil unit (1) without maintenance of the air filter (17) reach a pre-determined limit value.

4. Fan coil unit according to Claim 1, 2 or 3, wherein the electronic control unit (10) is programmed/configured to activate said power-assisted ejection device (22) when a clogging of the air filter (17) is detected.

5. Fan coil unit according to Claim 4, wherein the fan coil unit is additionally provided with at least one filter-cleaning sensor which is adapted to determine, in real time or cyclically, the degree of clogging of the air filter (17) and to communicate said degree to the electronic control unit (10).

6. Fan coil unit according to any one of the preceding claims, wherein the air filter (17) has a plate-like structure.

7. Fan coil unit according to any one of the preceding claims, wherein the air filter (17) is guillotine inserted into the protective grating (19).

8. Fan coil unit according to Claim 7, wherein the sliding plane (Ps) of the air filter (17) is tilted by a given angle (α) with respect to the laying plane of the protective grating (19) and/or of the face (2a, 2b) of the outer casing (2).

9. Fan coil unit according to Claim 8, wherein the tilting angle (α) of the sliding plane (Ps) is less than 5°.

10. Fan coil unit according to any one of the preceding claims, wherein the inlet mouth (6) of the through duct (5) is located at the front face (2a) of said outer casing (2) or at the lower face (2d) of said outer casing (2).

11. Fan coil unit according to any one of the preceding claims, wherein an outlet mouth (7) of the through duct (5) is located at the upper face (2c) of said outer casing (2).

12. Fan coil unit according to any one of the preceding claims, wherein the fan coil unit is provided with two lateral service compartments (15, 16), which are arranged inside the outer casing (2), on opposite sides of the through duct (5); a first service compartment (15) being adapted to house the electronic control unit (10); a second service compartment (16) being adapted to house the hydraulic components connecting the heat exchanger (8) to the external hydraulic circuit.

13. Fan coil unit according to any one of the preceding claims, wherein the fan coil unit comprises: a rigid and self-supporting inner framework (3) which is structured for being firmly fixed to the wall (P), at a given distance from the underlying floor (S); and an outer shell or covering (4) which is fixed/fitted onto the inner framework (3) so as to surround and cover the same inner framework (3), forming at least the front face (2a) and the two side faces (2e) of the outer casing (2).

14. Fan coil unit according to any one of the preceding claims, wherein the fan (9) is an electrically-operated tangential fan.

15. Fan coil unit according to any one of the preceding claims, **characterised by** additionally comprising a condensate-collection tray (18) placed beneath the heat exchanger (8).

## Patentansprüche

1. Gebläsekonvektoreinheit (1) aufweisend: ein im Wesentlichen quaderförmiges und starres Außengehäuse (2), das strukturiert ist, um fest an einer Wand (P) in einer im Wesentlichen vertikalen Position befestigt zu werden, und welches mit einem großen Durchgangskanal (5) versehen ist, der angepasst ist, um von der Außenluft durchkreuzt zu werden; einen Luft/Flüssigkeits-Wärmetauscher (8), der in dem Durchgangskanal (5) angeordnet ist, um von der Luft überstrichen/durchkreuzt zu werden, welche durch den Durchgangskanal strömt, und mit einem externen Hydraulikkreis derart verbunden ist, dass diese ebenfalls von einer heißen oder kalten Wärmeübertragungsflüssigkeit durchkreuzt wird; ein Gebläse (9), das angepasst ist, die Außenluft in den Durchgangskanal (5) zu zirkulieren; ein Schutzgitter (19), das auf einer Seite (2a, 2d) des Außengehäuses (2) derart angeordnet ist, dass eine Einlassmündung (6) des Durchgangskanals (5) verschlossen ist; und einen Luftfilter (17), der in einer manuell entfernbaren Art an dem Schutzgitter (19) befestigt ist; wobei der Luftfilter (17) an das Schutzgitter (19) derart gekoppelt ist, dass der Luftfilter (17) zwischen einer Betriebsposition, in welcher der Luftfilter (17) im Wesentlichen vollständig im Inneren des Körpers des Schutzgitters (19) derart angeordnet ist, dass dieser von im Wesentlichen der gesamten Luft, die durch den Durchgangskanal (5) über die Einlassmündung (6) eintritt, durchkreuzt wird; und einer Austauschposition, in welcher der Luftfilter (17) teilweise über das Schutzgitters (19) hinaus nach außen derart vorsteht, dass dieser von einer Person leicht erreichbar/greifbar ist, um entfernt zu werden, bewegbar ist;
wobei die Gebläsekonvektoreinheit (1) **dadurch gekennzeichnet ist, dass** diese zusätzlich aufweist: eine leistungsunterstützte Auswurfvorrichtung (22), welche angepasst ist, um auf Befehl den Luftfilter (17) von der Betriebsposition in die Austauschposition zu bewegen; und eine elektronische Steuereinheit (10), die angepasst ist, um diese leistungsunterstützte Auswurfvorrichtung (22) derart zu steuern, dass der Luftfilter (17) in der Austauschposition angeordnet wird, wenn vorgegebene Betriebsbedingungen auftreten.

2. Gebläsekonvektoreinheit nach Anspruch 1, wobei die elektronische Steuereinheit (10) angepasst ist, auch das Gebläse (9) in Abhängigkeit von den Signalen, die von einem oder mehreren Temperatursensoren erhalten werden, welche angepasst sind, die Temperatur der die Gebläsekonvektoreinheit umgebenden Luft zu detektieren, zu steuern, und/oder in Abhängigkeit von den Signalen, die von einem oder mehreren Temperatursensoren erhalten werden, welche angepasst sind, die Temperatur des Wärmetauschers (8) zu detektieren, zu steuern.

3. Gebläsekonvektoreinheit nach Anspruch 1 oder 2, wobei die elektronische Steuereinheit (10) programmiert/konfiguriert ist, die leistungsunterstützte Auswurfvorrichtung (22) zu aktivieren, wenn die Betriebsstunden der Gebläsekonvektoreinheit (1) ohne Wartung des Luftfilters (17) einen vorbestimmten Grenzwert überschreiten.

4. Gebläsekonvektoreinheit nach Anspruch 1, 2 oder 3, wobei die elektronische Steuereinheit (10) programmiert/konfiguriert ist, die leistungsunterstützte Auswurfvorrichtung (22) zu aktivieren, wenn ein Verstopfen des Luftfilters (17) detektiert wird.

5. Gebläsekonvektoreinheit nach Anspruch 4, wobei die Gebläsekonvektoreinheit zusätzlich mit wenigstens einem Filter-Reinigungs-Sensor versehen ist, welcher angepasst ist, in Echtzeit oder zyklisch den Grad des Verstopfens des Luftfilters (17) zu bestimmen und diesen Grad an die elektronische Steuereinheit (10) zu übermitteln.

6. Gebläsekonvektoreinheit nach einem der vorhergehenden Ansprüche, wobei der Luftfilter (17) eine plattenähnliche Struktur hat.

7. Gebläsekonvektoreinheit nach einem der vorhergehenden Ansprüche, wobei der Luftfilter (17) einschneidend in das Schutzgitter (19) eingesetzt ist.

8. Gebläsekonvektoreinheit nach Anspruch 7, wobei die Schnittebene (Ps) des Luftfilters (17) um einen vorgegebenen Winkel (a) in Bezug auf die Lageebene des Schutzgitters (19) und/oder der Fläche (2a, 2b) des Außengehäuses (2) geneigt ist.

9. Gebläsekonvektoreinheit nach Anspruch 8, wobei der Neigungswinkel (a) der Neigungsebene (Ps) kleiner als 5° ist.

10. Gebläsekonvektoreinheit nach einem der vorhergehenden Ansprüche, wobei die Einlassmündung (6) des Durchgangskanals (5) an der Vorderseite (2a) des Außengehäuses (2) oder an der Unterseite (2d) des Außengehäuses (2) angeordnet ist.

11. Gebläsekonvektoreinheit nach einem der vorhergehenden Ansprüche, wobei eine Auslassmündung (7) des Durchgangskanals (5) an der Oberseite (2c) des Außengehäuses (2) angeordnet ist.

12. Gebläsekonvektoreinheit nach einem der vorhergehenden Ansprüche, wobei die Gebläsekonvektoreinheit mit zwei lateralen Service-Kompartments (15, 16) versehen ist, welche im Inneren des Außengehäuses (2) auf einander gegenüberliegenden Seiten des Durchgangskanals (5) angeordnet sind, wobei ein erstes Service-Kompartment (15) angepasst ist, die elektronische Steuereinheit (10) aufzunehmen und ein zweites Service-Kompartment (16) angepasst ist, die hydraulischen Komponenten, die den Wärmetauscher (8) mit dem externen Hydraulikkreis verbinden, aufzunehmen.

13. Gebläsekonvektoreinheit nach einem der vorhergehenden Ansprüche, wobei die Gebläsekonvektoreinheit aufweist: einen starren und selbsttragenden inneren Rahmen (3), der strukturiert ist, um an der Wand (P) in einem vorgegebenen Abstand zu dem darunter liegenden Boden (S) fest fixiert zu werden; und eine untere Schale oder Abdeckung (4), die an dem/in den inneren Rahmen (3) derart fixiert/eingepasst ist, dass diese denselben inneren Rahmen (3) umschließt und abdeckt, um wenigstens die Vorderseite (2a) und die beiden seitlichen Seiten (2e) des Außengehäuses (2) zu bilden.

14. Gebläsekonvektoreinheit nach einem der vorhergehenden Ansprüche, wobei das Gebläse (9) ein elektrisch betriebenes Tangentialgebläse ist.

15. Gebläsekonvektoreinheit nach einem der vorhergehenden Ansprüche, **dadurch gekennzeichnet, dass** zusätzlich eine unterhalb dem Wärmetauscher (8) angeordnete Kondensatsammelschale (18) vorgesehen ist.

## Revendications

1. Ventilo-convecteur (1) comprenant : un carter extérieur (2) sensiblement parallélépipédique et rigide qui est structuré pour être fixé fermement à une paroi (P) dans une position sensiblement verticale, et est pourvu d'un grand conduit traversant (5) adapté pour être traversé par l'air extérieur ; un échangeur de chaleur (8) air/liquide, qui est situé à l'intérieur du conduit traversant (5) de manière à être parcouru/traversé par l'air qui circule le long du conduit traversant (5), et est relié à un circuit hydraulique externe de manière à être également traversé par un liquide de transfert thermique chaud ou froid ; un ventilateur (9) adapté pour faire circuler l'air extérieur à l'intérieur du conduit traversant (5) ; une grille protectrice (19) qui est agencée sur une face (2a, 2d) du carter extérieur (2) de manière à fermer une bouche d'entrée (6) du conduit traversant (5) ; et un filtre à air (17) qui est fixé, d'une manière amovible manuellement, à ladite grille protectrice (19) ;
le filtre à air (17) étant accouplé à la grille protectrice (19) de manière à être mobile entre une position de fonctionnement dans laquelle le filtre à air (17) est logé sensiblement entièrement à l'intérieur du corps de la grille protectrice (19) de manière à être traversé par sensiblement tout l'air qui entre dans le conduit traversant (5) par le biais de la bouche d'entrée (6) ; et une position de replacement dans laquelle le filtre à air (17) fait en partie saillie à l'extérieur de la grille protectrice (19) de manière à pouvoir être facilement atteint/saisi par une personne afin d'être retiré ;
le ventilo-convecteur (1) étant **caractérisé en ce qu'**il comprend en outre : un dispositif d'éjection assisté par moteur (22) qui est adapté pour déplacer, sur instruction, le filtre à air (17) de la position de fonctionnement à la position de replacement ; et une unité de commande électronique (10) qui est adaptée pour commander ledit dispositif d'éjection assisté par moteur (22) de manière à agencer le filtre à air (17) dans la position de replacement lorsque des conditions de fonctionnement données se produisent.

2. Ventilo-convecteur selon la revendication 1, dans lequel l'unité de commande électronique (10) est adaptée pour commander également le ventilateur (9) sur la base des signaux arrivant d'un ou de plusieurs capteurs de température adaptés pour détecter la température de l'air entourant le ventilo-convecteur (1), et/ou sur la base des signaux arrivant d'un ou de plusieurs capteurs de température adaptés pour détecter la température de l'échangeur de chaleur (8).

3. Ventilo-convecteur selon la revendication 1 ou 2, dans lequel l'unité de commande électronique (10) est programmée/configurée de manière à activer ledit dispositif d'éjection assisté par moteur(22) lorsque les heures de fonctionnement du ventilo-convecteur (1) sans maintenance du filtre à air (17) atteignent une valeur limite prédéterminée.

4. Ventilo-convecteur selon la revendication 1, 2 ou 3, dans lequel l'unité de commande électronique (10) est programmée/configurée pour activer ledit dispositif d'éjection assisté par moteur (22) lorsqu'un encrassement du filtre à air (17) est détecté.

5. Ventilo-convecteur selon la revendication 4, dans lequel le ventilo-convecteur est en outre pourvu d'au moins un capteur de nettoyage de filtre qui est adapté pour déterminer, en temps réel ou de manière cyclique, le degré d'encrassement du filtre à air (17) et pour communiquer ledit degré à l'unité de commande électronique (10).

6. Ventilo-convecteur selon l'une quelconque des revendications précédentes, dans lequel le filtre à air (17) présente une structure du type plaque.

7. Ventilo-convecteur selon l'une quelconque des revendications précédentes, dans lequel le filtre à air (17) est inséré à la façon d'une guillotine dans la grille protectrice (19).

8. Ventilo-convecteur selon la revendication 7, dans lequel le plan de coulissement (Ps) du filtre à air (17) est incliné d'un angle (α) donné par rapport au plan de pose de la grille protectrice (19) et/ou de la face (2a, 2b) du carter extérieur (2).

9. Ventilo-convecteur selon la revendication 8, dans lequel l'angle d'inclinaison (a) du plan de coulissement (Ps) est inférieur à 5°.

10. Ventilo-convecteur selon l'une quelconque des revendications précédentes, dans lequel la bouche d'entrée (6) du conduit traversant (5) est située au niveau de la face avant (2a) dudit carter extérieur (2) ou au niveau de la face inférieure (2d) dudit carter extérieur (2).

11. Ventilo-convecteur selon l'une quelconque des revendications précédentes, dans lequel une bouche de sortie (7) du conduit traversant (5) est située au niveau de la face supérieure (2c) dudit carter extérieur (2).

12. Ventilo-convecteur selon l'une quelconque des revendications précédentes, dans lequel le ventilo-convecteur est pourvu de deux compartiments de service (15, 16) latéraux, qui sont agencés à l'intérieur du carter extérieur (2), sur les côtés opposés du conduit traversant (5) ; un premier compartiment de service (15) étant adapté pour loger l'unité de commande électronique (10) ; un deuxième compartiment de service (16) étant adapté pour loger les composants hydrauliques reliant l'échangeur de chaleur (8) au circuit hydraulique externe.

13. Ventilo-convecteur selon l'une quelconque des revendications précédentes, dans lequel le ventilo-convecteur comprend : une ossature intérieure (3) rigide et autoportante qui est structurée pour être fixée fermement à la paroi (P), à une distance donnée du sol (S) sous-jacent ; et une coque extérieure ou un revêtement (4) qui est fixé(e)/monté(e) sur l'ossature intérieure (3) de manière à entourer et recouvrir la même ossature intérieure (3), formant au moins la face avant (2a) et les deux faces latérales (2e) du carter extérieur (2).

14. Ventilo-convecteur selon l'une quelconque des revendications précédentes, dans lequel le ventilateur (9) est un ventilateur tangentiel à fonctionnement électrique.

15. Ventilo-convecteur selon l'une quelconque des revendications précédentes, **caractérisé en ce qu'**il comprend en outre un plateau de collecte de condensat (18) placé sous l'échangeur de chaleur (8).
